# EUROPEAN PATENT APPLICATION

(11) **EP 2 592 286 A1**
(43) Date of publication of application: **15.05.2013**
(21) Application number: 12163879.5
(22) Date of filing: 12.04.2012
(51) Int. Cl.: F16B 43/02, A47G 1/20, A47G 25/06, B25C 1/02, B25C 5/16

(54) **Anchors and anchor systems for hanging objects, and a tool for installing such anchors**

(30) Priority: 08.11.2011 US 201113291693
(71) Applicant: Hip Innovations, LLC, Williston, VT 05495 (US)
(72) Inventor: Pettingill, James, Essex Junction VT Vermont 05452 (US)
(74) Representative: Moy, David

(57) **Abstract**

Anchors that each have a receiver (104) and a pin (112) designed and configured to be installed into a flat surface of a support structure (120) so that the central axis of the receiver and the longitudinal axis of the pin are skewed at a non-90° angle relative to the flat surface such that a planar face on the receiver entirely engages the flat surface. The anchors can be used in conjunction with one or more accessories, such as anchor hooks and anchor caps that are similarly configured with angled planar faces designed and configured to entirely engage the flat surface into which their corresponding respective anchors are installed. A specially designed and configured installation tool (500) can be used to ensure that the anchors are installed at the proper angle relative to the flat surface and the proper orientation for the anticipated load.

## Description

### FIELD OF THE INVENTION

The present invention generally relates to the field of support anchors. In particular, the present invention is directed to anchors and anchor systems for hanging objects, and a tool for installing such anchors.

### BACKGROUND

The hanging of objects from walls, columns, exposed beams and other structures is commonplace in homes, offices, hotels, hospitals, and other places. For example, homeowners often hang objects such as paintings, posters, photographs, clocks, curio cabinets, mirrors, and key-hangers on various walls throughout their homes as part of the décor and/or for functionality. Similar items are hung for similar reasons at places of business and other facilities. There is a myriad of devices available for facilitating the hanging of such objects, including nails, brads, screws, pushpins, eyehooks, J-hooks, double-sided adhesive tapes, and poster strips, among others.

### SUMMARY OF THE DISCLOSURE

In one implementation, the present disclosure is directed to an anchor for installing into a structure having a flat surface. The anchor includes a receiver having: a central axis; first and second ends spaced from one another along the central axis, wherein the second end includes a planar face designed and configured to engage the flat surface of the structure when the anchor is installed into the structure, the planar face defining a plane that is skewed at an acute angle relative to the central axis; and a support region located between the first and second ends, the support region designed and configured to engage an object that, when engaged with the support region when the anchor is properly installed into the structure, applies a load to the receiver in a direction substantially parallel to the plane of the planar face; and an elongated pin, having a longitudinal axis, secured to the receiver and located on the second end so that the longitudinal axis extends away from the first end in a direction substantially parallel to the central axis of the receiver, the elongated pin designed and configured to be inserted into the structure when the anchor is properly installed.

In certain embodiments, the acute angle is between about 55° and about 85°, or about 65° and about 80°, or about 70° and 77°.

Said receiver may comprise a body of solid material and said elongate pin may extend into said body. Preferably, the body is made of plastic and the elongated pin is embedded in the plastic.

In certain embodiments, the support region includes a recessed surface that is recessed relative to at least a first portion of said receiver at said second end, and preferably the recessed surface is recessed relative to a second portion of said receiver at said first end.

Preferably, the receiver has a circumference extending around the central axis and the recessed surface is recessed relative to the first and second portions around the entirety of the circumference.

In some embodiments, the receiver has a non-circular cross-sectional shape transverse to said control axis. Indeed, in some embodiments, said planer face has a load-bearing area that bears against the flat surface when the anchor is installed into the structure and a load is applied to said receiver, and the non-circular cross-sectional shape is a triangle having an edge, wherein the triangle is oriented so that the load-bearing area extends along the entirety of the edge.

The anchor may further comprise two or more elongated pins. The two or more elongated pins may be located side-by-side when the anchor is installed in a vertical wall. The elongated pin may have a height and a width that is greater than the height. In certain embodiments, the width is at least about 2 times the height, in other embodiments the width is at least about 3 times the height, and in other embodiments the width is at least about 4 times the height. Moreover, the elongated pin may be a flat pin.

The elongated pin may be curved in a plane transverse to the longitudinal axis.

In some embodiments, the receiver includes a notch located proximate to the second end. Moreover, the notch may be designed and configured to receive part of an object supported by the anchor. Furthermore, the notch may be configured so that it is substantially bisected by a plane parallel to said planer face.

In another implementation, the present disclosure is directed to an anchor system. The anchor system includes an anchor for installing into a structure having a flat surface, comprising: a receiver having: a central axis; first and second ends spaced from one another along the central axis, wherein the second end includes a first planar face designed and configured to engage the flat surface of the structure when the anchor is installed into the structure, the first planar face defining a plane that is skewed at a non-0° acute angle relative to the central axis; and a support region located between the first and second ends, the support region designed and configured to engage an object that, when engaged with the support region when the anchor is properly installed into the structure, applies a load to the receiver in a direction substantially parallel to the plane of the planar face; and an elongated pin, having a longitudinal axis, secured to the receiver and located on the second end so that the longitudinal axis extends away from the first end in a direction substantially parallel to the central axis of the receiver, the elongated pin designed and configured to be inserted into the structure when the anchor is properly installed; and an accessory designed and configured to be snugly received on the receiver and including an opening for conformally receiving the receiver, the accessory including a second planar face designed and configured to engage the flat surface of the structure when the anchor is installed into the structure and the accessory is engaging the receiver, wherein the opening has a longitudinal central axis skewed relative to the second planar face at the non-0° acute angle.

In certain embodiments, the accessory is a cap designed and configured to completely cover the receiver except where the first planer face engages the flat surface of the structure.

In certain embodiments, the accessories comprises a hook spaced from the opening.

In certain embodiments, the acute angle is between about 55° and about 85°, or about 65° and about 80°, or about 70° and 77°.

Said receiver may comprise a body of solid material and said elongate pin may extend into said body. Preferably, the body is made of plastic and the elongated pin is embedded in the plastic.

In certain embodiments, the support region includes a recessed surface that is recessed relative to at least a first portion of said receiver at said second end, and preferably the recessed surface is recessed relative to a second portion of said receiver at said first end.

Preferably, the receiver has a circumference extending around the central axis and the recessed surface is recessed relative to the first and second portions around the entirety of the circumference.

In still another implementation, the present disclosure is directed to a tool designed and configured to install anchors, one at a time onto a flat surface of a support structure, wherein each anchor includes a receiver having first and second ends spaced from one another along a central axis, wherein the second end includes a first planar face designed and configured to engage the flat surface when the anchor is installed into the structure, the planar face defining a plane that is skewed at an acute angle relative to the central axis, the anchor further including a pin extending along the central axis. The tool includes a body that includes: an anchor receiving region designed and configured to contain one of the anchors in a driving position with the pin of the anchor being located proximate to the flat surface of the structure when the tool is engaged with the flat surface prior to driving the anchor; and a base having a second planar face designed and configured to contact the flat surface of the structure during anchor-driving operations, wherein, when the anchor is positioned in the driving position, the second planar face is parallel to the first planar face of the receiver of the anchor positioned in the driving position such that the pin extends longitudinally along a driving axis that is skewed at the non-0° acute angle.

In certain embodiments, the acute angle is between about 55° and about 85°, or about 65° and about 80°, or about 70° and 77°.

In certain embodiments, the tool further comprises a driver having an impact head that moves along the driving axis during driving of the anchor in the anchor receiving region. Moreover, the driver may comprise a plunger having a hand-strike and a compression shaft extending between the hand-strike and the impact head.

In certain embodiments, the tool further comprises an auto-feed mechanism for automatedly feeding a second one of the anchors into the anchor receiving region after a first one of the anchors has been driven from the anchor receiving region.

In certain embodiments, the tool further comprises a storage compartment designed and configured to store a plurality of the anchors. Moreover, the storage compartment may be further designed and configured to store a plurality of anchor caps and a plurality of anchor hooks. Furthermore, the tool further comprises a moveable handle secured to the body, wherein the storage compartment is exposed and concealed by moving the moveable handle.

Each of the plurality of anchor hooks may include a third planer face designed and configured to engage the flat surface of the structure that the anchor is installed into and that one of the plurality of anchor hooks is engaging the receiver of the anchor; and an opening for snugly engaging the receiver and having a longitudinal central axis skewed relative to the third planer face at the acute angle; wherein the storage compartment includes a flat anchor-receiving surface for confronting the third planer faces of the plurality of anchor hooks; and a plurality of studs designed and configured to snugly receive the openings of the plurality of anchor hooks, each of the plurality of studs having a longitudinal axis skewed relative to the flat anchor-receiving surface at the non -0° acute angle.

### BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings, wherein:
FIG. 1A is an isometric view of an anchor made in accordance with aspects of the present invention;
FIG. 1B is an elevational cross-sectional view of the anchor of FIG. 1A installed into a support structure and supporting an object;
FIG. 2 is an elevational cross-sectional view of a conventional push-pin type anchor installed into a support structure and supporting an object;
FIG. 3A is an isometric view of an anchor hook made in accordance with aspects of the present invention;
FIG. 3B is an elevational cross-sectional view of the anchor hook of FIG. 3A installed on the installed anchor of FIG. 1B;
FIG. 4A is an isometric view of an anchor cap made in accordance with aspects of the present invention;
FIG. 4B is an elevational cross-sectional view of the anchor cap of FIG. 4A installed on the installed anchor of FIG. 1B;
FIG. 5A is an isometric view of an anchor-driving tool designed and configured for installing anchors that are the same as or similar to the anchor of FIG. 1A;
FIG. 5B is a longitudinal cross-sectional view of the anchor-driving tool of FIG. 5A, showing the tool engaged with a support structure in an anchor-driving position; and
FIG. 5C is an isometric view of the anchor-driving tool of FIG. 5A, showing the handle disengaged to reveal storage for anchor system components
FIG. 6A is a side view of an alternative anchor made in accordance with aspects of the present invention;
FIG. 6B is a plan view of the anchor of FIG. 6A, showing the width of the pin;
FIG. 7A is a side view of another alternative anchor made in accordance with aspects of the present invention;
FIG. 7B is a plan view of the anchor of FIG. 7A;
FIG. 8A is a side view of yet another alternative anchor made in accordance with aspects of the present invention; and
FIG. 8B is an end view of the anchor of FIG. 8A, as seen from the pin end of the anchor.

### DETAILED DESCRIPTION

In one aspect, the present invention is directed to novel anchors useful, for example, for hanging any of a variety of objects on a wall, column, exposed beam, or virtually any support structure made of a material or materials that is/are penetrable by an elongate pin and provide sufficient structural support for the anchor, at least for the load applied by the object(s) to be supported by that anchor. For context, a few examples of objects that can be hung from such anchors are mentioned in the Background section above and are repeated here for convenience. Those examples are paintings, posters, photographs, clocks, curio cabinets, mirrors, and key-hangers. Those skilled in the art will readily recognize that these examples are but a few of the virtually limitless number of objects that can be hung using one or more anchors disclosed herein. Also for context, examples of support structures with which anchors of the present disclosure can be used include wallboard (e.g., "sheetrock," "gypsum board," cement board," "plasterboard," etc.), wood and composite boards and sheets (e.g., in the form of paneling, doors, beams, columns, molding, casing, trim-board, furniture sides and other members, etc.), plaster walls, and tile grout-lines, among others. Of course, these are only a few examples of the many structures that can be used as a support structure for anchors of the present disclosure. Generally, all that is needed is that the material(s) of the support structure have the requisite structural strength and stability to hold a loaded anchor in place without detrimental movement of the anchor or other negative effect.

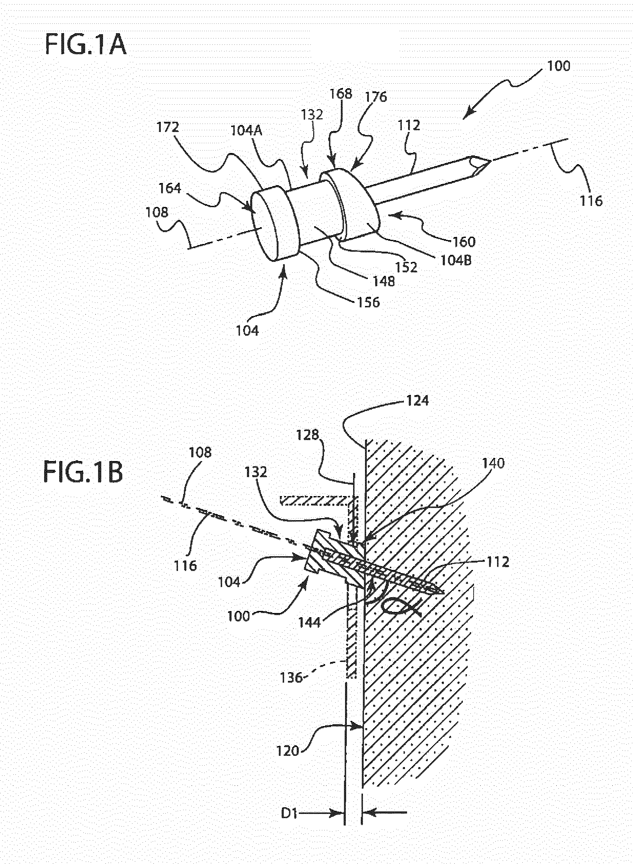

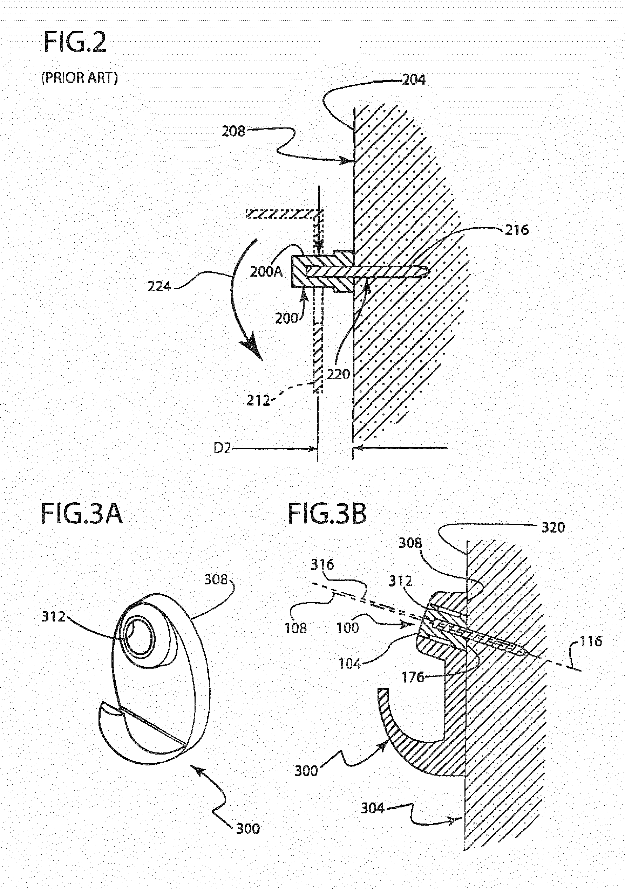

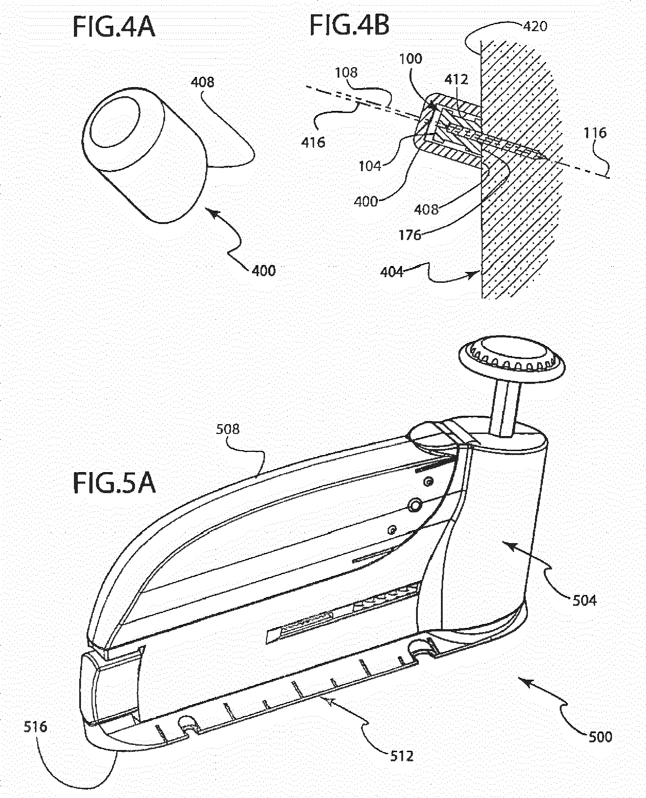

With that in mind, FIG. 1A illustrates an anchor 100 made in accordance with aspects of the present invention. As seen in FIG. 1A anchor 100 includes a receiver 104 having a central axis 108, and an elongated pin 112 having a longitudinal axis 116 that is coaxial with the central axis of the receiver. As seen in FIG. 1B, when anchor 100 is properly installed into a support structure having a flat surface, such as support structure 120 having flat surface 124, central and longitudinal axes 108 and 116 form an acute angle α relative to the flat surface. In the example shown, angle α is about 70°. In other embodiments, angle α may fall in a range of about 65° and about 80°, with a range of about 68° and about 77° being a useful sub-range of the larger range just mentioned. When flat surface 124 is a vertical surface and anchor 100 is installed to support a vertically downward load 128, acute angle α is ideally formed in a vertical plane that is perpendicular to the flat surface of support structure 120 and contains central and longitudinal axes 108 and 116, as shown in FIG. 1B. As will be described below in detail, the presence of acute angle α has a number of benefits, including inhibiting anchor 100 from being pulled out of support structure 128 and increasing the load-bearing capacity of the anchor relative to a conventional anchor. It is noted here for clarity that the term "receiver" is used to describe part of anchor 100 based on its functionality when in service. Receiver 100 is so named because it receives a load, such as downward load 120, either directly from an object or an anchor-engaging structure secured to the object or via an anchor accessory, such as an anchor hook (e.g., anchor hook 300 of FIGS. 3A and 3B) or an anchor cap (e.g., anchor cap 400 of FIGS. 4A and 4B).

Referring to FIGS. 1A and 1B, in the example shown receiver 104 includes a support region 132 that is designed and configured to receive an object, such as the object being supported by anchor 100, a support structure secured to the supported object, or an anchor accessory (e.g., anchor hook 300 of FIGS. 3A and 3B or anchor cap 400 of FIGS. 4A and 4B). FIG. 1B illustrates in phantom lines an anchor-engaging structure 136 of an object (not shown) hangingly supported by anchor 100, wherein the anchor-engaging structure is engaging receiver 104 on the upper side of the receiver. As those skilled in the art will readily appreciate, anchor-engaging structure 136 can be any of a variety of structures including, but not limited to, a hanger wire, a lip or other part of a picture or poster frame or frame of another object, such as a wall clock, piece of art, or other decoration, among many others.

An important feature to note relative to the engagement of anchor-engaging structure 136 with receiver 104 is its location 140 close to vertical flat surface 124 of support structure 120. Anchor 100 fosters the locating of anchor-engaging structure 136 at this location 140 by virtue of it being angled upward and away from flat surface 124 at acute angle α and the configuration of receiver 104 along its upper surface 104A, which tend to cause the anchor-engaging structure to naturally seat at location 140 by sliding of the anchor-engaging structure along the upper surface of the receiver either on its own or when a user is engaging it to the receiver. The closeness of location 140 to flat surface 124 is important in reducing the distance D1 from applied vertical load 128 to the flat surface, which reduces the moment induced by the vertical load and, consequently, reduces the pressure applied by pin 112 to support structure 120 at a location 144 proximate to flat surface 124. This can be important when support structure 120 is made of a material that is relatively weak in compression, such as gypsum board and similar wallboard, which can cause support structure 120 to crush at location 144 and allow anchor 100 to pivot, in this case counterclockwise.

Advantages of an anchor made in accordance with the present disclosure, such as anchor 100 of FIGS. 1A and 1B, can be easily appreciated by comparing it to a conventional anchor, such as conventional anchor 200 of FIG. 2, that is installed at a conventional 90°, i.e., non-acute, angle relative to a flat surface 204 of a support structure 208. As seen in FIG. 2, conventional anchor 200, with its initially horizontal upper surface 200A, does not foster the locating of the anchor-engaging structure 212 at a location as close as possible to flat surface 204 of support structure 208. Consequently, the likelihood of anchor-engaging structure 212 being located at a less-than-optimal distance D2 from flat surface 204 is much higher than with anchor 100 (FIG. 1B), which as discussed above fosters anchor-engaging structure 136 ending up at location 140, which is at the minimum distance D possible.

Under certain loading conditions, the greater moment arm corresponding to distance D2 of conventional anchor 200 of FIG. 2 relative to the moment arm corresponding to distance D1 of anchor 100 of FIG. 1B can be very detrimental to the performance of the conventional anchor. This is so because the larger moment arm will create higher pressure of the pin 216 at location 220 in support structure 208 near flat surface 204 than if anchor-engaging structure 212 were closer to the support structure. Depending on the material of support structure 208 and the magnitude of the pressure at location 220, the increased pressure can cause that material to crush at least at location 220, which can cause anchor 200 to pivot counterclockwise, as illustrated by arrow 224. This pivoting can lead to the snowballing effect of anchor-engaging structure 212 sliding away from flat surface 204 of support structure 208 along the now inclined upper surface 200A of anchor 200, which increases the moment arm, increases the loading at location 220, and increases the crushing at that location. This self-feeding effect can readily lead to anchor 200 pulling out of support structure 208 and the crashing of the object (not shown) previously supported by the anchor to a surface below. In stark contrast, an anchor of the present disclosure, such as anchor 100 of FIGS. 1A and 1B, has an upper surface that is angled toward the support structure and promotes the sliding of the anchor-engaging structure toward the support structure, thereby minimizing the moment arm of the load and minimizing the loading at the critical point beneath the pin that penetrates into the support structure.

In the example shown in FIGS. 1A and 1B, receiver 104 includes a central recess 148 that extends around the circumference of the receiver so as to define first and second shoulders 152 and 156 at opposing first and second ends 160 and 164 of the receiver that essentially defined corresponding respective first and second flanges 168 and 172. At upper surface 104A, first shoulder 152 provides a stop against which anchor-engaging structure 136 can rest when at location 140. As readily seen, due to the configuration of anchor 100, in which first end 160 has a planar face 176 that lies in a plane that forms acute angle α with central and longitudinal axes 108 and 116, first flange 168 varies in thickness in a direction along the central axis from relative thin at upper surface 104A to relatively thick at the bottom surface 104B to accommodate angle α. As those skilled in the art will readily appreciate, planar face 176 is designed and configured to substantially completely engage flat surface 124 of support structure 120 when anchor 100 is properly installed into the support structure. While central recess 148 is shown, in other embodiments the receiver need not have such a recess, or may have a completely different shape. For example, in some embodiments the receiver may have only a flange at the end that engages flat surface 124 of support structure 120, while in other embodiments the receiver may include a notch or other recess only at the upper surface, while in still other embodiments the receiver may have no contour or other features at all, especially if the corresponding anchor is intended to always be used with an accessory, such as either of accessories described below. Those skilled in the art will readily appreciate the variety of configurations that the receiver can take.

Pin 112 of this example extends into receiver 104, which is made of plastic. Pin 112 of this embodiment is made of a suitable metal for the material(s) into which it is designed to be inserted and is configured in length, transverse cross-sectional shape, tapering, etc., in a manner suitable for such material(s). In the example shown, pin 112 has a circular cross-sectional shape in a direction transverse to longitudinal axis 116. In other embodiments, however, the pin can have another transverse cross-sectional shape, such as an oval or rectangular shape that provides a larger bearing surface that reduces the stress on the material(s) of support structure 120 at critical locations, such as location 144 in FIG. 1B. As those skilled in the art will appreciate, a larger (wider) bearing surface at location 140 will decrease the pressure exerted on support structure 120 at location 140 and will, therefore, increase the load that location 144 can handle without crushing. In still other embodiments, more than one pin can be used. For example, two pins can be placed side-by-side horizontally (relative to the installation of FIG. 1B) or one above the other vertically, among many other multi-pin arrangements. Receiver 104 can readily be made of one or more materials other than plastic, such wood or metal, or a combination thereof. In addition, the pin(s) provided need not extend into the receive, but rather can be otherwise attached to the receiver. For example, the pin(s) can be affixed to a plate (e.g., in the manner of a metal thumb tack) and the plate can be bonded to the receiver.

In one specific instantiation of anchor 100: receiver 104 has an overall length of about 17 mm; first flange 168 ranges in thickness from about 1 mm to about 2 mm; second flange 172 has a uniform thickness of about 1.5 mm; the receiver has a diameter of about 5.5 mm at the first and second flanges and a diameter of about 4 mm at central recess 148; and pin 112 has a length outside of the receiver of about 9.5 mm and a nominal diameter of about 1.2 mm. These dimensions are simply exemplary and other instantiations can have any of a wide range of dimension sets.

As mentioned above, an anchor made in accordance with the present invention can be used with one or more accessories, such as an anchor hook and an anchor cap. FIG. 3A illustrates an exemplary anchor hook 300 designed and configured to be used with anchor 100 of FIGS .1A and 1B, and FIG. 3B illustrates anchor hook 300 engaged with anchor 100 and the resulting system installed into a suitable support structure 304. Similarly, FIG. 4A illustrates an exemplary anchor cap 400 designed and configured to be used with anchor 100 of FIGS. 1A and 1B, and FIG. 4B illustrates anchor cap 400 engaged with anchor 100 and the resulting system installed into a suitable support structure 404.

Turning first to anchor hook 300 of FIGS. 3A and 3B, this anchor hook can be considered to be a J-hook of sorts. Anchor hook 300 includes a planar face 308 and an opening 312 that is shaped and sized to snugly engage receiver 104 of anchor 100. Opening 312 has a central axis 316 that is skewed relative to planar face 308 at the same acute angle α at which central and longitudinal axes 108, 116 of anchor 100 are skewed relative to planar face 176 of anchor 100, as described above relative to FIGS. 1A and 1B. As those skilled in the art will readily appreciate, this skewing of central axis 316 of opening 312 allows virtually the entirety of planar face 308 of anchor hook 300 to engage the flat surface 320 of support structure 304 in the same manner as planar face 176 of anchor 100 when the anchor and anchor hook are properly installed. Anchor hook 300 may be made out of any suitable material(s), such as plastic, wood, metal, composite, etc., and any suitable combination thereof. Opening 312 can be a cavity open only at one end or an aperture that extends all the way through anchor hook 300. Those skilled in the art will appreciate that configurations other than the J-hook configuration shown can be readily made while retaining the desired relationship between the anchor receiver engaging opening (here, opening 312) and the planar face (here, planar face 308) that confronts and engages the support structure.

Turning next to anchor cap 400 of FIGS. 4A and 4B, this anchor cap is generally cylindrical in shape. Anchor cap 400 includes a planar face 408 and an opening 412 that is shaped and sized to snugly engage receiver 104 of anchor 100. Opening 412 has a central axis 416 that is skewed relative to planar face 408 at the same acute angle α at which central and longitudinal axes 108, 116 of anchor 100 are skewed relative to planar face 176 of anchor 100, as described above relative to FIGS. 1A and 1B. As those skilled in the art will readily appreciate, this skewing of central axis 416 of opening 412 allows virtually the entirety of planar face 408 of anchor cap 400 to engage the flat surface 420 of support structure 404 in the same manner as planar face 176 of anchor 100 when the anchor and anchor hook are properly installed. Anchor cap 400 may be made out of any suitable material(s), such as plastic, wood, metal, composite, etc., and any suitable combination thereof. Opening 412 can be a cavity open only at one end (shown) or an aperture that extends all the way through anchor cap 400. Those skilled in the art will appreciate that configurations other than the cylindrical configuration shown can be readily made while retaining the desired relationship between the anchor receiver engaging opening (here, opening 412) and the planar face (here, planar face 408) that confronts and engages the support structure.

An anchor made in accordance with the present disclosure can be installed into a support structure using any suitable techniques and/or devices. For example, depending on the material(s) of the support structure, an installer might be able to use his/her fingers, a pushing tool, or a hammer or other conventional impact tool. However, such techniques and tools can result in improper orientation of the anchor. For example, when a flat surface into which an anchor is being installed is vertical and the load being transferred by the anchor to the support structure is vertically downward, installation using a conventional tool/technique could result in the plane containing non-zero acute angle α not being vertical and/or the actual angle between the vertical surface and the central axis of the receiver part of the anchor being greater or less than the acute angle α (discussed above relative to FIGS. 1B, 3B, and 4B) between the central axis of the receiver and the plane of the planar face of the receiver intended to entirely engage the flat surface of the support structure, such that the planar face does not entirely engage the flat surface as designed. To avoid these problems, an installer can use a special driving tool configured to ensure that any anchor made in accordance with the present disclosure is properly installed every time, such as anchor-driving tool 500 of FIGS. 5A to 5C.

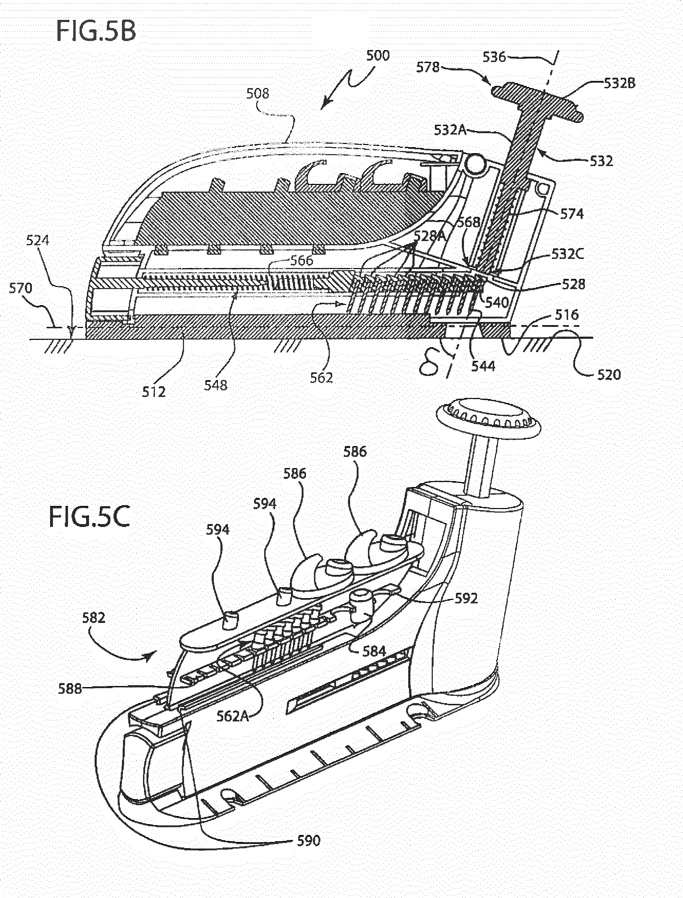

Turning now to FIG. 5A, anchor-driving tool 500 includes a body 504 having a handle 508 and a base 512. Handle 508 is designed and configured to allow a user (not shown) to comfortably hold anchor-driving tool 500 with one hand while performing the driving operation, described below, with the other hand. As will also be described below, in this particular embodiment, handle 508 is removable. Base 512 has a planar face 516 designed and configured to entirely engage a flat surface of a support structure into which an anchor is being installed, as illustrated in FIG. 5B by the engagement of planar face 516 with flat surface 520 of support structure 524 during the installation of anchor 528. Anchor-driving tool 500 further includes an anchor driver, which in this case is a hand-actuated plunger 532. As best seen in FIG. 5B, plunger 532 has a central shaft 532A extending along a driving axis 536, which forms a non-0° angle δ with the plane containing planar face 516 that is equal to acute angle α of the anchor that anchor-driving tool 500 is designed to use, here, anchor 528. Non-0° angle α is as defined above relative to anchor 100 of FIGS. 1A and 1B. As those skilled in the art will readily appreciate, the matching geometries of anchor-driving tool 500 and anchor 528 ensure that the anchor is installed into support structure 524 at the proper angle when planar face 516 of base 512 is entirely engaged with flat surface 520 of the support structure. By "proper angle" it is meant that the planar face 540 of anchor 528 will entirely engage flat surface 520 of support structure 524 such that the acute angle between the longitudinal axis of pin 544 of anchor 528 and the plane of the flat surface of the support structure is equal to acute angle α.

With continuing reference to FIG. 5B, anchor-driving tool 500 includes an automated-feed mechanism 548 that receives a ribbon 562 of anchors 528A that are identical to anchor 528 and are secured to one another only to the extent necessary to maintain the integrity of the ribbon during normal handling and loading into the tool. In this example, feed mechanism 548 uses a spring 566 to urge ribbon 562 in a direction toward an anchor-receiving region 568 that contains the next-to-be-installed anchor, here anchor 528, in the proper driving position and orientation for proper installation. Those skilled in the art will readily appreciate, with the configuration of ribbon 562 and the orientation of anchors 528A therein, when each of those anchors is installed on a flat vertical surface, such as flat surface 520 shown in FIG. 5B, with the longitudinal axis 570 of base 512 oriented vertically, each of the anchors will be installed with the plane of its non-0° acute angle α being vertical, which is the desired orientation for vertical loadings.

As mentioned above, plunger 532 is designed and configured to be hand operated. Consequently, plunger 532 includes a hand-strike 532B that is secured to central shaft 532A and is designed and configured to be struck by a hand of an installer and/or by a suitable hand-tool, such as a rubber mallet. Central shaft 532A has an impact head 532C that is designed and configured to impact anchor 528 during driving operations. A spring 574 biases plunger 532 back into a pre-driving position 578 after having been struck during a driving operation. As those skilled in the art can readily envision, during driving operations, after the installer has properly engaged base 512 with the desired flat surface, here flat surface 520, and oriented longitudinal axis 570 of the base to the desired orientation, the installer strikes hand-strike 532B, which causes plunger 532 to move along driving axis 536 such that impact head 532C eventually impacts anchor 528 and the plunger drives the anchor into the support structure, here, support structure 524. After the installer removes his/her hand from hand-strike 532B, spring 574 biases plunger 532 back to its pre-driving position 578.

FIG. 5C illustrates a storage compartment 582 that is typically concealed by (re)movable handle 508 (FIG. 5A), that slidably engages body 504. Storage compartment 582 includes a variety of features for storing ribbons of anchors, here, one ribbon 562A is shown, for storing multiple anchor caps, here, one anchor cap 584 is shown, and for storing multiple anchor hooks, here, two anchor hooks 586 are shown. Features for storing anchor ribbons 562A include a shelf 588 and a corresponding combined pin stay/handle receiver 590. A feature for storing anchor caps 584 is a multi-receiver bracket 592 into which the caps snap with a snap fit, and features for storing anchor hooks 586 include studs 594, which are each sized and angled at acute angle α to accommodate one of the anchor hooks as shown.

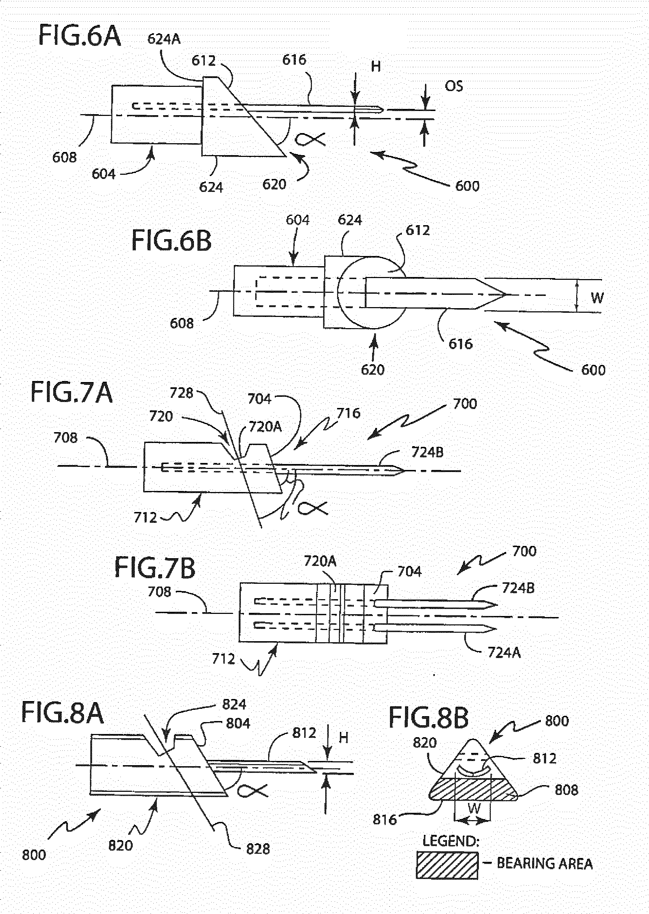

As mentioned above, anchors made in accordance with various aspects of the present invention can take any of a wide variety of forms. For example, FIGS. 6A and 6B illustrate an anchor 600 that is generally similar to anchor 100 of FIGS. 1A, 1B, 3 and 4 and 528 of FIG. 5B, but includes several distinguishing features. Like anchors 100 and 528, receiver 604 of anchor 600 has a generally circular cross-sectional shape transverse to a longitudinal central axis 608 and has a planar face 612 that forms an acute angle α with respect to the longitudinal central axis for the reasons described above relative to FIG. 1B. However, distinguishing features of anchor 600 include: 1) the presence of a wide pin 616; 2) an offset, OS, of the wide pin relative to longitudinal central axis 608 in a vertical direction, and 3) the lack of a "second flange" (see second flange 172 of anchor 100 of FIGS. 1A and 1B) at the end opposite the pin end 620.

Regarding wide pin 616, the width, W, of this pin in a direction perpendicular to a load (not shown, but see FIG. 1B) is greater than its height, H, of the pin in order to provide a greater bearing area for the load bearing region (see location 144 of FIG. 1B) at the interface of the pin and the structure into which anchor 600 is installed (see, e.g., structure 124 of FIG. 1B). As used herein and in the appended claims, the width of a pin is the maximum width W of the portion of the pin that is inserted into a support structure in a direction perpendicular to the load applied to the anchor and parallel to the surface of the support structure, and the height H of the pin is the maximum height of the portion of the pin that is inserted into a support structure in a direction parallel to that applied load. In the example of FIG. 6, the height H of pin 616 is equal to its thickness, but in other embodiments, the height H can be different from the material thickness of the pin, such as happens with pin 812 of FIGS. 8A and 8b. As those skilled in the art will readily appreciate, the increased bearing area of a wide pin, such as pin 616 of FIGS. 6A and 6B results in a lower pressure at that location than for a narrower pin, such as pin 112 of FIGS. 1A and 1B, for any given load. Lowering the pressure can not only reduce the likelihood of crushing of the support structure that could result in failure as illustrated in FIG. 2, but lowering the pressure can increase the load capacity of the anchor. Although wide pin 616 is shown as being a flat pin, those skilled in the art will understand that it can be another shape, such as oval or generally D-shaped with the curved side either on the upper side or lower side, relative to FIG. 6A. In some embodiments width W can be set to at least about two times height H; in other embodiments width W can be set to at least about three times height H; and in still other embodiments width W can be set to at least about 4 times height H.

As a complementary feature to wide pin 616, in the embodiment shown the wide pin is offset by distance OS from longitudinal central axis 608. A purpose of offset OS is to increase the area of planar face 612, which is the region that bears against a support structure when installed and loaded in the same manner as anchor 100 of FIG. 1B. For any given load, the larger bearing area reduces the pressure relative to a like anchor that does not have offset OS. Again, lower pressures can result in a lower likelihood of crushing of the corresponding support structure and in increased load capacity of the anchor, here, anchor 600. This can be particularly useful for anchors installed in drywall and similar materials that have relative low crushing resistance.

As mentioned, anchor 600 of FIGS. 6A and 6B also lacks a "second flange," but it does include a "first" flange 624 that is similar to anchor 100 of FIGS. 1A and 1B. Like first flange 168 of anchor 100, flange 624 of anchor 600 of FIGS. 6A and 6B can provide a stop at shoulder 624A so that the part of an object (not shown) supported by anchor 600 that engages the anchor does not contact the support structure in which the anchor is installed (see FIG. 1B). As will be seen with the embodiment of FIGS. 7A and 7B, flange 624 is not needed in all embodiments. Aspects of anchor 600 of FIGS. 6A and 6B not described can be the same as the like aspects of anchor 100 of FIGS. 1A and 1B.

FIGS. 7A and 7B illustrate another anchor 700 that has several distinguishing features relative to anchor 100 of FIGS. 1A, 1B, 3, and 4, anchor 528 of FIG. 5B, and anchor 600 of FIGS. 6A and 6B. While anchor 700 of FIGS. 7A and 7B has features similar to anchors 100, 528, and 600, such as the inclusion of a planar face 704 that forms an acute angle α relative to a longitudinal central axis 708 of receiver 712, distinguishing features relative to those other embodiments include: 1) a largely rectangular cross-sectional shape in a direction transverse to the longitudinal central axis, 2) the lack of a "first flange" at the pin end 716 of the anchor; 3) the inclusion of a notch 720 that can replace a function of the first flange, and 4) the presence of more than one pin, here two pins 724A, 724B.

Regarding the rectangular transverse cross-sectional shape of receiver 712 of anchor 700, this shape illustrates that receivers of anchors made in accordance with aspects of the present invention do not need to have circular transverse cross-sectional shapes. Indeed, FIGS. 8A and 8B illustrate yet another transverse cross-sectional receiver shape and its particular benefits. The cross-sectional shapes particularly disclosed herein should by no means be considered limiting, but merely illustrative.

Anchor 700 also illustrates that the receiver of an anchor incorporating aspects of the present invention can be flangeless. In this case, receiver 712 has a constant transverse cross-sectional shape, except at notch 720 and sloping planar face 704. When a flange is present on the pin end of an anchor made in accordance with the present disclosure, the flange can provide a stop that inhibits the part of the object hung with the anchor that engages the receiver from contacting the surface of the support into which the anchor is installed. In some cases, not having any such stop is acceptable. In those cases, some embodiments of anchors made in accordance with the present disclosure can be flangeless and not include any other feature(s) that act as a stop. However, where such a stop or supported-object guiding function is desired, the receiver can be provided with one or more features to provide such functionality. In the case of anchor 700 of FIGS. 7A and 7B, notch 720 provides that functionality.

In this example, notch 720 is designed and configured to receive one or more particular parts of one or more objects that can be hung using one or more anchors 700. Examples of such parts include wire, wire rope, string, metal tabs, frame edges, flanges, etc. As seen in FIG. 7A, notch 720 is generally bisected by a plane 728 that is parallel to planar face 704. This is so because when anchor 700 is installed on a vertical surface of a support structure in the manner of anchor 100 of FIG. 1B, planar face 704 is in contact with that surface and is vertical, as is plane 728 of notch 720. Also in this example, notch 720 has a base 720A that is perpendicular to planar face 704.

As mentioned above, anchor 700 includes two pins 724A, 724B, which in this example are circular pins located in a side-by-side manner. By increasing the number of pins beyond a single pin, a designer can increase the area of the pin that bears on the support structure into which it is installed at a location near the surface of the support structure. As discussed above in connection with FIG. 2, a frequent cause of failure of conventional anchors is crushing of the support structure at that location, especially for soft materials such as drywall. While FIGS. 7A and 7B illustrate two cylindrical pins 724A, 724B side-by-side, more than two pins can be used, the pins can have shapes other than cylindrical, and the pins can be arranged differently, such as vertically spaced and staggered.

FIGS. 8A and 8B illustrate an anchor 800 of the present invention that has a non-axisymmetric shape, here a triangular shape, that concentrates a large portion of the area of planar face 804 to a region 808 beneath pin 812, as best seen in FIG. 8B. When anchor 800 is installed into a support structure in the manner illustrated in FIG. 2, region 808 is largely the bearing area of planar face that bears against the surface of the support structure. For a given load, the larger the bearing area, the smaller the bearing pressure. Greater bearing area can also lead to higher load capacities of an anchor, such as anchor 800. A particular benefit to the triangular shape shown is that the location of highest pressure within bearing region 808, that is the location closest to edge 816, has the greatest width, W, thereby making optimizing pressure distribution. In this example, anchor 800 also includes a wide curved pin 812 to maximize the load carrying capacity of the anchor. In this example, the height, H, of pin 812 is greater than the material thickness of the pin, and the width, W, of the pin is about 2.5 times height H. Like anchor 700 of FIGS. 7A and 7B, receiver 820 of anchor 800 of FIGS. 8A and 8B also includes a notch 824 that is similar in form and function to notch 720 of anchor 700, including being generally bisected by a plane 828 that is substantially parallel to planar face 804.

Exemplary embodiments have been disclosed above and illustrated in the accompanying drawings. It will be understood by those skilled in the art that various changes, omissions and additions may be made to that which is specifically disclosed herein without departing from the spirit and scope of the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An anchor for installing into a structure having a flat surface, comprising:
a receiver having:
a central axis;
first and second ends spaced from one another along said central axis, wherein said second end includes a planar face designed and configured to engage the flat surface of the structure when the anchor is installed into the structure, said planar face defining a plane that is skewed at an acute angle relative to said central axis; and
a support region located between said first and second ends, said support region designed and configured to engage an object that, when engaged with said support region when the anchor is properly installed into the structure, applies a load to said receiver in a direction substantially parallel to said plane of said planar face; and
an elongated pin, having a longitudinal axis, secured to said receiver and located on said second end so that said longitudinal axis extends away from said first end in a direction substantially parallel to said central axis of said receiver, said elongated pin designed and configured to be inserted into the structure when the anchor is properly installed.

2. An anchor according to claim 1, wherein said acute angle is between about 55° and about 85°, or between about 65° and about 80°, or between about 70° and about 77°.

3. An anchor according to claim 1, wherein said receiver comprises a body of solid material and said elongated pin extends into said body.

4. An anchor according to claim 1, wherein said support region includes a recessed surface that is recessed relative to at least a first portion of said receiver at said second end.

5. An anchor according to claim 1, wherein said receiver has a non-circular cross-sectional shape transverse to said central axis.

6. An anchor according to claim 1, further comprising two or more elongated pins.

7. An anchor according to claim 1, wherein said elongated pin has a height and a width that is greater than said height.

8. An anchor according to claim 7, wherein said width is at least about 2 times said height, or at least about 3 times said height, or at least about 4 times said height.

9. An anchor according to claim 1, wherein said receiver includes a notch located proximate to said second end.

10. An anchor system, comprising:
an anchor for installing into a structure having a flat surface, comprising:
a receiver having:
a central axis;
first and second ends spaced from one another along said central axis, wherein said second end includes a first planar face designed and configured to engage the flat surface of the structure when the anchor is installed into the structure, said first planar face defining a plane that is skewed at a non-0° acute angle relative to said central axis; and
a support region located between said first and second ends, said support region designed and configured to engage an object that, when engaged with said support region when the anchor is properly installed into the structure, applies a load to said receiver in a direction substantially parallel to said plane of said planar face; and
an elongated pin, having a longitudinal axis, secured to said receiver and located on said second end so that said longitudinal axis extends away from said first end in a direction substantially parallel to said central axis of said receiver, said elongated pin designed and configured to be inserted into the structure when the anchor is properly installed; and
an accessory designed and configured to be snugly received on said receiver and including an opening for conformally receiving said receiver, said accessory including a second planar face designed and configured to engage the flat surface of the structure when the anchor is installed into the structure and the accessory is engaging said receiver, wherein said opening has a longitudinal central axis skewed relative to said second planar face at said non-0° acute angle.

11. An anchor system according to claim 10, wherein said accessory is a cap designed and configured to completely cover said receiver except where said first planar face engages the flat surface of the structure.

12. An anchor system according to claim 10, wherein said accessory comprises a hook spaced from said opening.

13. An anchor system according to claim 10, wherein said anchor is as claimed in any one of claims 2 to 4.

14. A tool designed and configured to install anchors, one at a time onto a flat surface of a support structure, wherein each anchor includes a receiver having first and second ends spaced from one another along a central axis, wherein the second end includes a first planar face designed and configured to engage the flat surface when the anchor is installed into the structure, the planar face defining a plane that is skewed at an acute angle relative to the central axis, the anchor further including a pin extending along the central axis, the tool comprising:
a body that includes:
an anchor receiving region designed and configured to contain one of the anchors in a driving position with the pin of the anchor being located proximate to the flat surface of the structure when the tool is engaged with the flat surface prior to driving the anchor; and
a base having a second planar face designed and configured to contact the flat surface of the structure during anchor-driving operations, wherein, when the anchor is positioned in the driving position, said second planar face is parallel to the first planar face of the receiver of the anchor positioned in the driving position such that the pin extends longitudinally along a driving axis that is skewed at the non-0° acute angle.

15. A tool according to claim 14, wherein the acute angle is between about 55° and about 85°, or about 65° and about 80°, or about 70° and about 77°.

16. A tool according to claim 14, further comprising a driver having an impact head that moves along said driving axis during driving of the anchor in said anchor receiving region.

17. A tool according to claim 14, further comprising an auto-feed mechanism for automatedly feeding a second one of the anchors into said anchor receiving region after a first one of the anchors has been driven from the anchor receiving region.

18. A tool according to claim 14, further comprising a storage compartment designed and configured to store a plurality of the anchors.

19. A tool according to claim 18, wherein said storage compartment is further designed and configured to store a plurality of anchor caps and a plurality of anchor hooks.

20. A tool according to claim 19, wherein each of the plurality of anchor hooks includes:
a third planar face designed and configured to engage the flat surface of the structure that the anchor is installed into and that one of the plurality of anchor hooks is engaging the receiver of the anchor; and
an opening for snugly engaging the receiver and having a longitudinal central axis skewed relative to the third planar face at the acute angle;
wherein said storage compartment includes:
a flat anchor-receiving surface for confronting the third planar faces of the plurality of anchor hooks; and
a plurality of studs designed and configured to snugly receive the openings of the plurality of anchor hooks, each of said plurality of stubs having a longitudinal axis skewed relative to said flat anchor-receiving surface at the non-0° acute angle.
